# EUROPÄISCHE PATENTSCHRIFT

(11) **EP 2 417 388 B1**
(45) Veröffentlichungstag und Bekanntmachung des Hinweises auf die Patenterteilung: **10.02.2016**
(21) Anmeldenummer: 10717568.9
(22) Anmeldetag: 31.03.2010
(51) Int. Cl.: F21V 23/04, F21K 99/00, H05B 33/08, H05B 37/02

(54) **INTEGRIERTE LED- UND SENSORVORRICHTUNG**
INTEGRATED LED AND SENSOR DEVICE
DISPOSITIF DEL ET CAPTEUR INTÉGRÉ

(30) Priorität: 09.04.2009 DE 202009005454 U
(43) Veröffentlichungstag der Anmeldung: 15.02.2012
(73) Patentinhaber: Tridonic Jennersdorf GmbH, 8380 Jennersdorf (AT)
(72) Erfinder: HARTMANN, Paul, A-8160 Weiz (AT); HOSCHOPF, Hans, A-8380 Jennersdorf (AT); GIANORDOLI, Stefan, A-8280 Fürstenfeld (AT); TASCH, Stefan, A-8380 Jennersdorf (AT)
(74) Vertreter: Rupp, Christian
(86) Internationale Anmeldenummer: PCT/EP2010/054298
(87) Internationale Veröffentlichungsnummer: WO 2010/115801

(56) Entgegenhaltungen:
- EP-A1- 1 988 577
- WO-A1-2010/094567
- WO-A2-03/055273
- WO-A2-2010/040645
- US-A1- 2003 117 803
- US-A1- 2004 105 264
- US-A1- 2006 072 317
- US-A1- 2006 181 416
- US-A1- 2007 007 898
- US-A1- 2007 195 544
- US-A1- 2008 246 844

## Beschreibung

Die vorliegende Erfindung bezieht sich auf ein Retrofit-LED-Modul, d.h. ein LED-Modul in einem Gehäuse, dessen Anschlüsse (Stifte, Fassung,...) so ausgebildet sind, dass das LED-Modul als Ersatz oder Austausch von bestehenden anderen Leuchtmitteln, insbesondere als Glühbirnenersatz bzw. Niedervolt- oder bspw. 20 Volt-Halogenlampenersatz verwendet werden kann. Unter "LED" ist in der Beschreibung und den Ansprüchen stets "OLED" mitumfasst.

Für den korrekten Betrieb einer Leuchtdiode (LED) muss der zugeführte elektrische Strom den Betriebseigenschaften der LED angepasst werden. Hierfür wird eine Ansteuerelektronik verwendet, welche diskret aufgebaut sein kann, d.h. aus einzelnen elektrischen Bauelementen besteht. Diese befinden sich innerhalb des Gehäuses, meist unterhalb des LED-Chips im Lampensockel, der bei Netzstromlampen gleichzeitig elektrische wie mechanische Verbindung zur Lampenfassung darstellt.

In einer möglichen Ansteuerung der LED beim Anschluss an Netzspannung wird ein Transformator verwendet, mit dem die Wechselspannung auf eine für LED-Schaltungsanordnungen geeignete Betriebsspannung transformiert wird. Weiterhin wird ein AC-DC-Gleichrichter dem Transformator nachgeschaltet, wobei beide Bauteile zusammen die Funktion eines Netzteils erfüllen. Zur Spannungsglättung wird der als Last am Netzteil angeschlossenen LED ein Kondensator parallel geschaltet.

Zur geeigneten Strom- bzw. Spannungsbegrenzung besteht jedoch noch eine Vielzahl anderer möglicher Vorschaltungen.

US2007/0007898 A1 offenbart ein Retrofit-LED-Modul nach dem Oberbegriffs des Anspruchs 1.

DE 10 2004047681 B4 zeigt eine LED Schaltungsanordnung, bei der eine Spannungsversorgung von beispielsweise 110 oder 220 Volt Wechselspannung vorgesehen sind. Als Gleichrichter der Wechselspannung wird ein Brückengleichrichter verwendet, dessen Gleichrichterdioden strahlungsemittierende LEDs sind. An den Brückengleichrichter sind 2 weitere LEDs als Last angeschlossen. Des Weiteren weist die Anordnung mindestens zwei Mehrfach-Chip-LEDs auf, die jeweils zwei LEDs des Brückengleichrichters und eine LED der Last enthalten.

EP 07 117 245.6 zeigt ein LED Modul, welches einen LED-Chip aufweist, der direkt oder indirekt auf einer Platte aus Silizium angebracht ist. Die Platte steht seitlich über die Fläche des LED-Chips über, welcher eine aktive lichtemittierende Schicht und ein Substrat aufweist. In der Siliziumplatte ist mindestens ein elektrisches Bauteil integriert, welches einen Teil des Steuerschaltkreises des LED-Chips darstellt.

US 6 710 376 B2 zeigt einen komplett aus Silizium bestehenden Optokoppler, der zwei Substratschichten aufweist, die durch einen transparenten Isolator getrennt sind. Auf der Oberseite der unteren Schicht ist eine LED angebracht und die Oberseite der oberen Schicht weist einen Lichtsensor auf, wobei der Lichtsensor so konfiguriert ist, dass er von der LED ausgestrahltes Licht detektieren kann. Weiterhin werden Verfahren gezeigt, wie Schaltkreise von der LED oder dem Lichtsensor isoliert werden können, dass beiden Siliziumschichten CMOS und Bipolarschaltungen beliebig hinzugefügt werden können.

DE 10 2006 037292 A1 zeigt eine Lichtquelle umfassend eine Mehrzahl von LEDs, die auf einem Substrat befestigt sind, und einen Sensor zum Messen von Licht von den LEDs. Jede LED emittiert Licht mit einem zu den anderen LEDs unterschiedlichen Spektrum. Der Sensor erzeugt eine Mehrzahl von Signalen, wobei jedes Signal durch einen Sensorwert gekennzeichnet ist, der proportional zu der Lichtintensität ist, die durch eine entsprechende der LEDs emittiert wird.

Aus US 5 962 906 ist ein möglicher Aufbau eines Dioden Farbsensor, insbesondere eines CMOS-Sensors bekannt.

Es besteht nun das Problem, dass eine konstante Beleuchtung, beispielsweise von Räumen oder von Schaufenstern, unter verschiedensten Bedingungen, wie unterschiedlichen Tageszeiten, erwünscht ist. Auf Grund der unterschiedlichen Bedingungen muss eine optimale künstliche Beleuchtung jedoch auch individuell daran anpassbar sein. Gleichzeitig ist es wünschenswert, bei Einsatz von neuen und energiesparenderen Technologien vorhandene Anschlussmöglichkeiten zu nutzen, so wie es mit Retrofit-LED-Modulen als Glühbirnenersatz möglich ist. Diese müssen jedoch vorgegebene Norme, wie Abmessungen der Lampenfassungen oder Eigenschaften der Spannungsversorgung, erfüllen.

Die Erfindung setzt an diesem Problem an und stellt eine Lösung bereit, wie Retrofit-LED-Module so verbessert werden können, dass diese für eine individuelle und automatisierte Beleuchtung sorgen und gleichzeitig vorhandene Mittel, wie Netzstromversorgung oder Lampenfassungsabmessungen, vorteilhaft nutzen, bzw. mit ihnen konform sind. Diese Aufgabe wird erfindungsgemäß durch die Merkmale des unabhängigen Anspruchs gelöst. Die abhängigen Ansprüche bilden den zentralen Gedanken der Erfindung in besonders vorteilhafter Weise weiter.

Erfindungsgemäß wird also ein Retrofit-LED-Modul vorgeschlagen, das dank intelligenter Steuerung individuell einstellbar ist und adaptiv arbeitet.

Hierfür weist ein LED-Modul einen Träger mit mindestens zwei LED auf. Das LED-Modul hat einen Retrofit-Anschluss, womit es mechanisch wie elektrisch an konventionelle Lampenfassungen bzw. Sockel angeschlossen werden kann. Des Weiteren umfasst das LED-Modul eine Elektronik zum Ansteuern der mindestens zwei LED. Ein Teil dieser Elektronik ist dabei in den Träger integriert. Die Elektronik weist einen ersten Sensor bzw. die zugehörige Elektronik zur Signalverarbeitung auf, um die integrierte Amplitude des ausgestrahlten Lichts des Retrofit-LED-Moduls zu messen. Ferner weist die Elektronik einen zweiten Sensor bzw. die zugehörige Elektronik zur Signalverarbeitung auf, um die Umgebungshelligkeit zu erfassen bzw. das Farbspektrum des Umgebungslichts zu messen. Des Weiteren ist jeder LED ein Farb- und/oder Helligkeitssensor zugeordnet, um direkt deren ausgestrahltes Licht zu messen. Es können also die eigentlichen Sensoren und/oder die Signalverarbeitungs-Elektronik in dem Träger integriert sein.

Der erste Sensor kann ein Lichtsensor oder ein Farbsensor sein und der zweite Sensor kann ein Tageslichtsensor oder ein Farbsensor sein.

Der Lichtsensor ist dabei vorzugsweise dazu ausgelegt, die Helligkeit oder andere optische Eigenschaften des von dem LED-Modul ausgestrahlten Lichts zu erfassen. Der Tageslichtsensor ist dagegen vorteilhafterweise dazu ausgelegt, die Helligkeit des Umgebungslichts zu erfassen, und ist vorzugsweise unbeeinflusst von dem von dem LED-Modul ausgestrahlten Licht. Die Farbsensorik wiederum kann dazu ausgelegt sein, das Farbspektrum des von dem LED-Modul ausgestrahlten Lichts und/oder des Umgebungslichts zu erfassen. Ein Beispiel ist ein RGB sensitiver Farbsensor. Natürlich ist es dabei auch möglich, dass ein Sensor sowohl Helligkeit, als auch Farbspektrum misst.

Ferner ist der Farb- und/oder Helligkeitssensor, der jeder der LEDs zugeordnet ist, vom Licht der anderen LEDs abgeschattet.

Der Träger besteht aus einem oder mehreren Substraten, vorzugsweise aus Silizium oder einer Siliziumverbindung.

Die Erfindung sieht weiterhin vor, dass die in den Träger integrierte Elektronik als Chip-On-Board realisiert ist. Bei der Chip-on-Board-Technologie (COB) werden ungehäuste Halbleiter, beispielsweise ein integrierter Schaltkreis (aus Silizium oder anderen Grundstoffen) direkt auf die Leiterplatte geklebt und danach mit Mikrodrähten zur Platine kaltgeschweißt (Drahtbonden).

Eine weitere Möglichkeit besteht darin, dass die in den Träger integrierte Elektronik als integrierter Schaltkreis auf dem Substrat des Trägers ausgebildet ist.

Die Erfindung bezieht sich darüber hinaus auf eine Ansteuerelektronik, die den Betrieb des Retrofit-LED-Moduls regelt, insbesondere die LEDs ansteuert.

Die Elektronik kann dabei als eine intelligente Steuerschaltung ausgebildet sein, beispielsweise als ASIC oder Mikrocontroller. Diese wird für eine adaptive Steuerung des LED-Moduls verwendet.

Ebenfalls denkbar ist, dass die Elektronik eine Temperatursensorik aufweist.

Möglich ist auch, dass die Elektronik eine Bewegungssensorik aufweist.

Darüber hinaus kann die Elektronik eine Schallsensorik aufweisen.

Die Erfindung sieht weiterhin vor, dass die Sensorik, die die Elektronik aufweist, sich innerhalb des Ausstrahlwinkels mindestens einer LED befindet und/oder davon abgeschattet ist.

Schließlich sieht die Erfindung eine Ansteuerelektronik vor, die ein Dimmen mindestens einer LED ermöglicht.

Das LED Modul kann verschiedenfarbige LEDs aufweisen. Dabei kann es sich um jeweils mindestens eine rote, eine grüne und eine blau LED handeln. Diese sind unabhängig voneinander ansteuerbar. Dadurch können verschiedene Farbspektren und Helligkeiten des ausgestrahlten Lichts erzeugt werden.

Ebenfalls denkbar ist die Verwendung von mindestens einer blauen LED. Mittels dieser kann unter Verwendung von Farbkonversionsmittel weißes Licht erzeugt werden.

Weiterhin ist bei der Erfindung vorgesehen, dass die Sensorik, insbesondere die Lichtsensorik, nur in kurzen, voneinander zeitlich getrennten Zeitintervallen aktiviert ist. Die mindestens eine LED ist dagegen in diesen Zeitintervallen ausgeschaltet.

Offenbart ist auch ein System, das aus mindestens zwei LED-Modulen besteht. Die LED-Module weisen dabei jeweils alle oben beschriebene

Merkmale auf. Darüber hinaus verfügt das System über mindestens eine Steuereinheit. Diese regelt das System auf adaptive und synchronisierte Weise.

Das System weist dabei mindestens einen Sensor auf, insbesondere eine Lichtsensorik auf. Dieser ist nur in kurzen, voneinander zeitlich getrennten Zeitintervallen aktiviert. Die LEDs der mindestens zwei LED-Module sind dagegen in diesen Zeitintervallen ausgeschaltet.

Das System ist so ausgebildet, dass die mindestens eine Steuereinheit und die Retrofit-LED-Module miteinander kommunizieren können.

Darüber hinaus weist jedes Retrofit-LED-Modul eine eindeutige Adresse und/oder eine Zuordnung zu einer primär für sie zuständigen Steuereinheit auf.

Das System ist dahingehend adaptierbar, dass jedes einzelne Retrofit-LED-Modul individuell, insbesondere die Helligkeit und das Farbspektrum des emittierten Licht betreffend, einstellbar ist.

Außerdem ist das System dahingehend adaptiv, dass es äußere Einflüsse, beispielsweise Tageslicht, so kompensieren kann, dass ein konstantes Licht oder eine konstante Änderung des Lichts, beispielsweise in einem Verkaufsraum, gewährleistet ist.

Weitere Merkmale, Vorteile und Eigenschaften der vorliegenden Erfindung sollen nunmehr anhand der Figuren der beigefügten Zeichnungen sowie der detaillierten Erläuterung eines Ausführungsbeispiels näher erläutert werden.
- Fig. 1: zeigt ein erstes Ausführungsbeispiel eines Retrofit-LED-Moduls für konventionelle Netzstromlampenfassungen,
- Fig. 2: zeigt ein zweites Ausführungsbeispiel eines Retrofit-LED-Moduls, das als Niedervolt -Halogenlampenersatz dient,
- Fig. 3a: zeigt schematisch ein erstes Ausführungsbeispiel eines Trägers mit LED und Steuerschaltung,
- Fig. 3b: zeigt schematisch ein zweites Ausführungsbeispiel eines Trägers mit LED und Steuerschaltung,
- Fig. 3c: zeigt schematisch ein drittes Ausführungsbeispiel eines Trägers mit LED und Steuerschaltung, und
- Fig. 4: zeigt ein Beispiel eines Retrofit-LED-Modul-Systems.

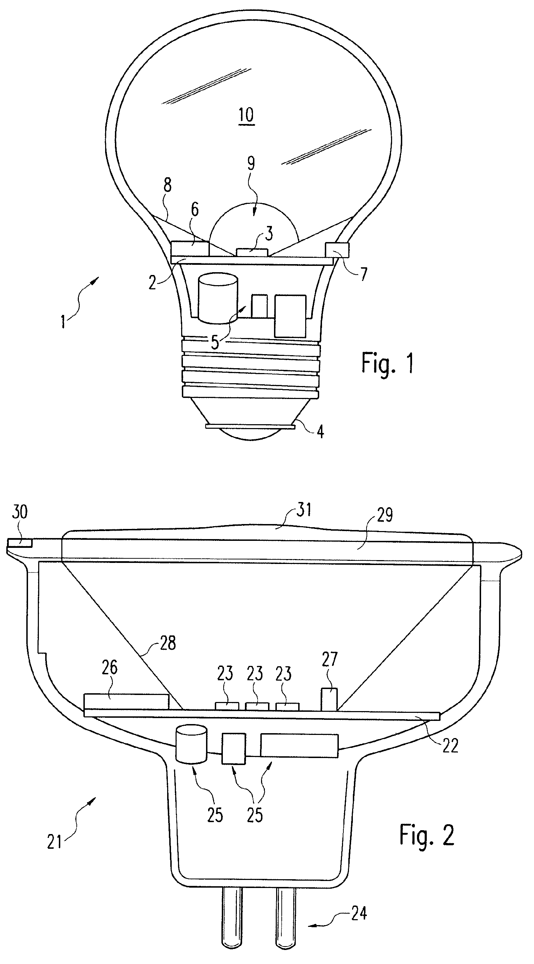

In Fig. 1 ist ein Ausführungsbeispiel des Retrofit-LED-Moduls 1 dargestellt, wobei dieses für konventionellen Netzstrom vorgesehen ist. Hierfür weist es einen Sockel 4 zum Einschrauben in konventionelle Netzstromfassungen auf. Ein LED-Chip 3 ist auf einem Träger 2 angebracht. Bei dem Träger kann es sich dabei um ein oder mehrere Substrate handeln. Diese bestehen vorzugsweise aus Silizium oder einer Siliziumverbindung.

Es bleibt zu vermerken, dass ebenfalls mehrere LEDs auf dem Träger angebracht werden können. Des Weiteren ist denkbar mehrere Träger mit mehren LEDs zu verwenden. Auf diese Art und Weise können die Hauptausstrahlrichtungen der einzelnen LEDs in verschieden Richtungen orientiert sein. Damit kann der Gesamtausstrahlwinkel des Retrofit-LED-Moduls vergrößert werden.

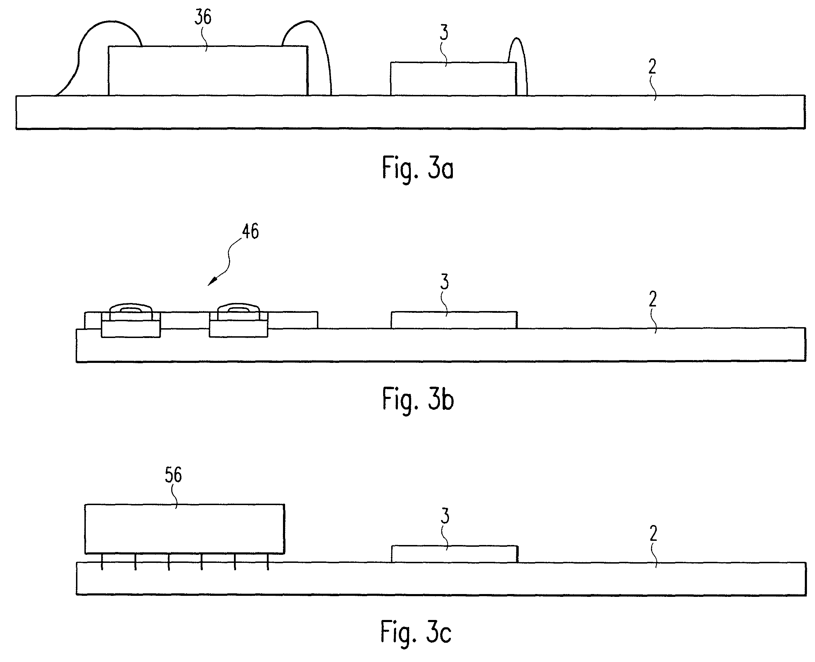

Außerdem befindet sich auf dem Träger eine Elektronik 6. Bei dieser handelt es sich vorzugsweise um einen Chip on Board oder um einen auf dem Träger ausgebildeten integrierten Schaltkreis. Weitere Ausführungen hierzu sind im Beschreibungstext zu Fig. 3a, 3b und 3c zu finden.

Weiterhin weist das Retrofit-LED-Modul eine Elektronik 5, die nicht in den Träger integriert ist bzw. nicht auf diesem angebracht ist. Diese Elektronik besteht vorzugsweise aus diskreten elektrischen Bauteilen. Die Bauteile befinden sich vor allem unterhalb des Trägers, können jedoch auch seitlich der LED angebracht sein. Der Platz innerhalb des Sockels kann auf diese Weise ebenfalls genutzt werden. Bei der Elektronik 5, die in Fig.1 lediglich angedeutet ist, handelt es sich um eine Ansteuerung der LED 3. Diese umfasst insbesondere eine für LEDs geeignete Spannungs- und Stromanpassung, so wie sie aus dem Stand der Technik bekannt ist. Diese kann u.a. einen Transformator zur Herabsetzung der Netzspannung von beispielsweise 220V oder 110V aufweisen. Zusätzlich ist ein AC-DC-Gleichstromwandler sinnvoll, der den Wechselstrom in Gleichspannung umwandelt. Es können außerdem noch weitere elektrische Bauelemente, wie ein oder mehrere Kondensatoren und/oder eine oder mehrere Drosseln, vorhanden sein. Wie bereits erwähnt zeigt Fig.1 lediglich eine Andeutung, wo die Bauteile sich vorteilhafter Weise befinden. Die Anzahl, Art und Orientierung/bzw. Verschaltung der einzelnen Bauteile wird hier nicht offenbart.

Grundsätzlich wird eine Ausführung bevorzugt, in der lediglich die Bauteile diskret ausgebildet sind, die sich nicht als integrierter Schaltkreis auf dem Träger 2 realisieren lassen. Ein Beispiel hierfür wäre der Spannungstransformator.

Das Retrofit-LED-Modul kann jeweils einen oder mehrere Sensoren 7 verschiedener Art aufweisen.

Bei dem Sensor kann es sich um einen oder mehrere Lichtsensoren und/oder Tageslichtsensoren handeln. Diese sind insbesondere für eine Referenzierung des aktuellen Beleuchtungszustands zum Sollwert vorteilhaft einsetzbar.

Außerdem kann es sich um eine Farbsensorik handeln. Mit dieser kann das aktuelle Farbspektrum des ausgeleuchteten Raums mit dem Sollwert referenziert werden.

Ebenfalls denkbar ist, dass es sich um eine Temperatursensorik handelt. Diese ist insbesondere im Freien für eine korrekte Ansteuerung der mindestens einen LED vorteilhaft.

Möglich ist auch, dass es sich um eine Bewegungssensorik handelt. Diese ist besonders dann vorteilhaft, wenn die Beleuchtung auf Bewegungen adaptiv reagieren soll. Beispielsweise könnte sie automatisch eingeschaltet werden, wenn eine Person einen Raum betritt.

Darüber hinaus kann es sich um einen akustischen Sensor handeln. Mit Hilfe dieser könnten Signale wie Klatschen oder ein Sprachbefehl den Zustand der Beleuchtung verändern, sie beispielsweise ein- und ausschalten.

Diese Sensoren befinden sich vorzugsweise ebenfalls auf dem Träger 2. Wenn möglich, wie bei einem Lichtsensor, sind die Sensoren auf dem Substrat des Trägers ausgebildet. Es besteht jedoch auch die Möglichkeit einen oder mehrere Sensoren räumlich vom Träger 2 zu trennen. Dies ist beispielsweise sinnvoll, wenn der Sensor nicht vom LED-Chip oder der anderen Elektronik beeinflusst werden darf, beispielsweise vom ausgestrahlten Licht, ausgestrahlter Wärme oder Elektromagnetischer Wellen.

Ein Beispiel hierfür wäre die Verwendung eines Temperatursensors, falls dieser dazu bestimmt ist die Außentemperatur und nicht die Temperatur des LED-Chips zu messen. Eine solche Messung der Außentemperatur kann dann sinnvoll sein, wenn das Retrofit LED-Modul unter starken Temperaturschwankungen, wie sie unter anderem im Außenbereich vorkommen, eingesetzt wird. Hier kann eine Temperaturschwankung mittels des Temperatursensors erfasst werden und die Ansteuerung der LED angepasst werden. Dadurch kann die Beleuchtung konstant gehalten und die Lebensdauer des Retrofit LED-Moduls erhöht werden.

Darüber hinaus besteht jedoch auch die Möglichkeit, den Sensor auf dem Träger zu montieren und mittels geeigneter Abschattungsmittel, diesen trotzdem von anderen Bauteilen, insbesondere der LED, zu separieren. Die Abschattungsmittel sind also so ausgelegt, dass der Sensor von dem ausgestrahlten Licht der LED nicht beeinflusst wird. Es handelt sich dann um einen Tageslichtsensor, der dazu ausgelegt ist, die Amplitude der Umgebungsbeleuchtung zu messen.

Ein Beispiel hierfür wird in Fig. 1 gezeigt. Die LED 3 befindet sich in einer Kavität 8. Diese weist vorzugsweise eine reflektierende Oberfläche auf. Ein Sensor 7 ist so auf dem Träger 2 angebracht, dass die Kavität 8 den Sensor 7 von der LED 3 räumlich trennt. Damit liegt der Sensor 7 auch außerhalb vom Ausstrahlwinkel der LED. Gleichzeitig ist der Sensor auf dem Träger 2 so angebracht, dass der Sensor seitlich aus dem Retrofit LED-Modul hinausragt. Somit ist es beispielsweise möglich, einen Lichtsensor zur Messung des Umgebungslichts einzusetzen. Es bleibt zu bemerken, dass der Sensor in jedem Fall so angeordnet sein sollte, dass er sich nach Montage des Retrofit LED-Moduls nicht innerhalb der Lampenfassung befindet, d.h. dass der Sensor nach Einbau des Retrofit LED-Moduls aus der Lampenfassung hervorragt.

Die LED 3 befindet sich vorzugsweise in einer Kapsel 9. Diese kann beispielsweise aus transparentem Silikon bestehen. Weiterhin ist diese vorzugsweise mit einem Diffusormittel versehen. Außerdem kann die Oberfläche für eine zusätzliche Streuung des emittierenden Lichts aufgeraut sein. Denkbar wäre auch, oberhalb der Kapsel eine zusätzliche Streuscheibe einzufügen. Die Größe der Kapsel kann beliebig variiert werden, zwischen einer minimalen Abdeckung des LED-Chips und einer kompletten Ausfüllung des Raums 10 oberhalb des LED-Chips.

Wenn eine oder mehrere blaue LEDs 3 verwendet werden, wird der Kapsel 9 vorzugsweise ein Wellenlängen-Konversionsmittel hinzugefügt. Auf diese Weise kann ein Teil des emittierten blauen Lichts in gelbes umgewandelt werden. Somit emittiert das LED-Retrofit-Modul in seiner Gesamtheit weißes Licht.

In Fig.2 ist ein zweites Ausführungsbeispiel eines Retrofit-LED-Moduls 21 gezeigt. Bei diesem handelt es sich um einen Niedervolt Halogenstrahler-Ersatz. Dieser weist zur mechanischen wie elektrischen Kontaktierung die 2 Stifte 24 auf.

Des Weiteren ist wieder ein Träger 22 mit einer Elektronik 26 gezeigt. Außerdem befinden sich unterhalb des Trägers weitere, vor allem diskrete elektrische Bauteile 25 zur Spannungs- und Stromanpassung. In diesem Ausführungsbeispiel weist das Retrofit-LED-Modul zwei Sensoren 27 und 30 auf. Der Sensor 27 befindet sich auf dem Träger 22 und innerhalb der Kavität 28. Somit ist dieser innerhalb des Ausstrahlbereichs der 3 LEDs 23 angebracht. Es handelt sich beim Sensor 27 bspw. um einen Lichtsensor, der die integrierte Amplitude des ausgestrahlten Lichts des Retrofit-LED-Moduls misst. Die Messung kann dabei direkt erfolgen, indem der Sensor 27 so ausgelegt ist, dass er das von LEDs ausgestrahlte Licht direkt erfasst, oder indirekt, indem der Sensor 27 so ausgelegt ist, dass er das an den Wänden der Kavität 28 und/oder an einer Mischeibe 29 reflektierende Licht erfasst. Vorteilhafterweise ist er dabei durch Abschattungsmittel von direktem Lichteinfall geschützt. Der Sensor kann auch an anderer Position angeordnet sein, z.B. zwischen den LEDs. Der weitere Sensor 30 befindet sich am Rand der Oberseite des Retrofit-LED-Moduls. Dieser ist auf diese Weise außerhalb des Ausstrahlbereichs des emittierten Lichts. Darüber hinaus ist der Sensor 30 nicht auf dem Träger 22 angebracht, sondern davon separiert. Es können ebenfalls noch zusätzliche Abschattungsmittel eingesetzt werden, wie ein erhöhter Rand der Kavität 28 oder eine seitlich Lichtundurchlässige Linse 31 und/oder Streuscheibe 31. Es kann sich also bei dem Sensor 30 um einen Tageslichtsensor 30 handeln, ausgelegt zur Erfassung der Umgebungshelligkeit.

Es jedoch auch denkbar, dass es sich bei den Sensoren 27 und 30 alternativ oder zusätzlich um Farbsensoren handelt, die dazu ausgelegt sind, das Farbspektrum des Umgebungslichts zu messen. Wiederum kann der Sensor 27 zur Farbmessung des von den LEDs ausgestrahlten Lichts und der Sensor 30 zur Farbmessung des Umgebungslichts augelegt sein.

Beim Sensor 27 ist es dabei vorteilhaft, wenn dieser zur Erfassung des Mischlichts der LEDs 23 ausgelegt ist, beispielsweise indem dieser wie oben beschrieben indirekt das ausgestrahlte Licht erfasst. Auch möglich ist, dass jeder LED ein Farb- und oder Helligkeitssensor zugeordnet ist, die direkt deren ausgestrahltes Licht messen und eventuell noch zusätzlich jeweils vom Licht der anderen LEDs abgeschattet sind.

Bei dem Farbsensor kann es sich um einen auf Photodioden basierten RGB- (Farb-) oder XYZ- (Interferenz-) Filter handeln. Beim RGB(Farb)- Filter weist der Farbsensor drei Fotodioden auf. Jede dieser Fotodioden hat ein eigenes dielektrisches Farbfilter für die Farben Rot, Grün und Blau. Damit können die Farbanteile des auftreffenden Lichts gemessen werden. Denkbar ist auch der Einsatz eines Farbsensors mit Polymerfilter-Beschichtungen.

Als Farbsensor kann ebenfalls ein Dioden-Farbsensor, insbesondere ein CMOS (Complementary Metal Oxid-Semiconductor) - Sensor eingesetzt werden. Dieser weist vorzugsweise eine Farbsensorschicht auf einem Substrat auf, die mehrere verschiedene Farbsensorbereiche korrespondierend zu verschiedenen Farben, z.B. rot-grünblau, umfasst. Diese Sensorschicht ist durch eine Farbfilterschicht bedeckt, die wiederum durch einen Schutzfilm bedeckt ist. Einfallendes Licht wird so durch die Filterschicht so gefiltert, dass Jeder Sensor die Helligkeit des entsprechenden Lichtanteils misst. Zwischen Sensorschicht und Filterschicht kann sich ebenfalls noch eine sogenannte Blackmatrixschicht und/oder eine transparente Planarisierungsschicht befinden.

Zur Messung der Lichtfarbe kann auch die Temperatur der einzelnen LEDs, insbesondere von deren Halbleiterübergängen, gemessen werden und dadurch die Leuchtintensität bestimmt werden.

Ein auf Photodioden basierter XYZ- (Interferenz-) Filtersensor kann ein sogenannter True Colour Sensor sein, welcher eine Farbmessung auf Basis der Normspektralwertfunktion CIE 1931 (DIN5033) durchführt. Der XYZ- (Interferenz-) Filtersensor kann ein Sensor der MTCS-Serie wie der MTCSiCs True Color Sensor von MATeT sein.

Das auf den Sensor treffende Licht erzeugt einen Photo-Strom in Abhängigkeit der Helligkeit. Eine nachgeschaltete elektrische Verstärkung wandelt den Strom in eine Spannung, die zur Kalibrierung und Signalverarbeitung digitalisiert wird. Eine Auswertung kann in einem entsprechend programmierten Mikrocontroller, z.B. einem ASIC, erfolgen.

Diese genannten Verarbeitungsschritte erfolgen vorzugsweise durch eine Elektronik, die in den Träger integriert ist.

Die resultierenden XYZ-Tristimulus-Werte können dabei auch in andere Farbräume umgerechnet werden wie z.B. Yxy oder L*u'v'. Ein Sollwert L*u'v'(r) zur Farbkontrolle und Regelung kann dabei manuell festgelegt sein und/oder durch einen zweiten Farbsensor gemessen werden, wobei der erste Sensor beispielsweise die Leuchtfarbe der LEDs bestimmt und der zweite die Farbe des Umgebungslichts. Über die Differenz zwischen einem gemessenen Wert und dem Sollwert kann eine Anpassung der Beleuchtung vorgenommen werden. Diese kann beispielsweise über eine entsprechende PWM-Ansteuerung der einzelnen LEDs umgesetzt werden.

Vorteilhafterweise wird die Betriebstemperatur der LEDs in die auszuwertenden digitalisierten Messwerte mit einberechnet, d.h. es erfolgt eine Regelung der Beleuchtung nicht nur über die Farbmessung, sondern alternativ oder zusätzlich über die Temperaturmessung. In einer kostengünstigen Ausführungsform kann eine solche Temperaturkompensation dadurch erfolgen, dass bei einer maximalen Betriebsleistung der LEDs und einer mittleren Betriebstemperatur von beispielsweise 25°C die digitalisierten Sensorwerte auf einen niedrigen Pegel eingestellt sind, wie beispielsweise 60%. Somit kann vermieden werden, dass bei einer erhöhten Betriebstemperatur der LEDs unzulässig hohe digitalisierte Sensorwerte entstehen.

Falls die LEDs mit geregeltem Strom betrieben werden, kann die Steuereinheit ausgehend von den gemessenen Farbwerten die sich durch unterschiedliche Stromstärken ändernden Wellenlängen des Lichts der LEDs zu kompensieren.

Damit die Messung des Sensors 27, wenn es sich beispielsweise um einen Lichtsensor handelt, trotzdem nicht von den LEDs negativ beeinträchtigt wird, kann dieser beispielsweise nur aktiviert sein, wenn die LEDs ausgeschaltet sind. Hierfür ist der Sensor 27 nur in einem kurzen, periodisch wiederkehrenden Zeitintervall aktiviert. Während dieser Zeit sind die LEDs ausgeschaltet, die ansonsten angeschaltet sind.

Die Zahl der Sensoren ist in keiner Weise auf zwei begrenzt. Es werden hier lediglich zwei zur Erläuterung der verschiedenen möglichen Ausrichtungen gezeigt.

Bei den 3 LEDs 23 handelt es sich vorzugsweise um eine rote, eine grüne und eine blaue LED. Auf diese Weise kann durch Mischen des emittierten Lichts, beispielsweise mit einer Streuscheibe 29 weißes Licht erzeugt werden. Zusätzlich kann eine Linse 31 verwendet werden. Wie im ersten Ausführungsbeispiel von Fig.1 gezeigt, kann zur Lichtstreuung ebenfalls eine transparente Kapsel mit Diffusormittel verwendet werden (in Fig.2 nicht gezeigt). Denkbar wäre auch, insbesondere bei kleineren Strahlern, den gesamten Raum innerhalb der Kavität mit transparentem Füllmittel aufzufüllen.

In diesem Ausführungsbeispiel ist es dank der roten, grünen und blauen LEDs ebenfalls möglich, Licht in unterschiedlichsten Farbspektren zu erzeugen. So kann das Retrofit-LED-Modul auf verschiedenste Stimmungen eingestellt werden oder sich automatisch darauf einstellen. Hierfür können sowohl Helligkeit als auch Spektrum des emittierten Lichts angepasst werden.

In Fig.3a, 3b und 3c sind Ausführungsbeispiele des Trägers 28 mit der sich darauf befindenden Elektronik gezeigt. Der Träger besteht vorzugsweise aus einem oder mehreren Substraten. Bei diesen handelt es sich insbesondere um Silizium oder Siliziumverbindungen. Auf dem Träger ist mindestens eine LED 3 angebracht. Diese kann in Face-Up oder Face-Down Position angebracht sein. Ausserdem ist denkbar, dass diese ein zusätzliches Substrat, beispielsweise aus Saphir aufweist. Alternativ kann es sich jedoch auch um einen Thin-Chip-LED handeln. Dieser wird in Face-Down Position auf dem Träger 2 montiert und anschließend das LED-Substrat, das sich nun auf der Oberseite befindet, entfernt.

In Fig. 3a ist die Elektronik 36 als Chip-On-Board realisiert. Bei der Chip-on-Board-Technologie (COB) werden ungehäuste Halbleiter, beispielsweise ein integrierter Schaltkreis (aus Silizium oder anderen Grundstoffen) direkt auf die Leiterplatte geklebt und danach mit Mikrodrähten zur Platine kaltgeschweißt (Drahtbonden). Denkbar ist jedoch auch, den Chip, wie in Fig.3c gezeigt, mittels elektrisch leitender Stifte auf den Träger zu stecken. Auf diese Weise ist dieser mechanisch fixiert und elektrisch mit dem Träger durchkontaktiert.

Eine alternative Möglichkeit wird in Fig. 3b gezeigt. Hier ist die in den Träger integrierte Elektronik 46 als integrierter Schaltkreis auf dem Substrat des Trägers ausgebildet. In diesem Beispiel wird schematisch ein CMOS (Complementary Metal Oxide Semiconductors) gezeigt. Dieser weist nebeneinander einen n-MOS und einen p-Mos auf. Selbstredend besteht die integrierte Schaltung in der realen Umsetzung aus mehr als einem CMOS.

Die integrierte Schaltung kann auch zumindest zum Teil innerhalb des Trägers, beispielsweise innerhalb eines Siliziumsubstrats, angeordnet sein. Somit ist es möglich, dass die mindestens eine LED auf der Oberseit genau des Substrats angebracht ist, in dem sich die integrierte Schaltung oder einzelne elektronische Komponenten befindene.

Die Elektronik 3 auf dem Träger 2 kann als eine intelligente Steuerschaltung ausgebildet sein, beispielsweise als ASIC oder Mikrocontroller. Diese wird für eine adaptive Steuerung des LED-Moduls verwendet.

Die Elektronik kann außerdem einen oder mehrere Sensoren umfassen. Insbesondere Lichtsensoren lassen sich, beispielsweise als invers betriebene LED, auf vorteilhafte Weise auf dem Träger ausbilden.

Die Steuerschaltung digitalisiert die durch die Sensoren erzeugten Signale mittels eines A/D-Wandlers. Anschließend können diese so verarbeitet werden, dass die Betriebsweise der einen oder mehreren LEDs auf die Umgebungsbedingungen eingestellt wird. Zusätzlich besteht die Möglichkeit, mittels einer Benutzerschnittstelle, aufweisend zumindest einen An/Ausschalter, die Betriebsweise von außen zu steuern.

Zur elektrischen Kontaktierung der LED und der Steuerschaltung besteht die Möglichkeit des Drahtbondings, wie in Fig.3a gezeigt. Des Weiteren ist es möglich, elektrische Leiter in dem Träger 2 zu realisieren. Diese können aus Drähten, beispielsweise aus Gold oder Kupfer bestehen. Für eine feinere Kontaktierung, wie sie insbesondere für Steuerschaltung notwendig ist, besteht die Möglichkeit, via Dotierung des Trägers Leiter in demselbigen zu realisieren und diese voneinander zu isolieren.

Zuletzt soll bemerkt werden, dass es ebenfalls denkbar ist, nur einen Teil der Steuerschaltung auf dem Träger zu realisieren und darüber hinaus eine separate Steuerschaltung zu verwenden. So wäre es beispielsweise möglich, die Steuerlogik auf dem Träger anzubringen, und einen damit verbundenen Speicherbaustein unterhalb des Trägers im Retrofit-LED-Modul anzubringen.

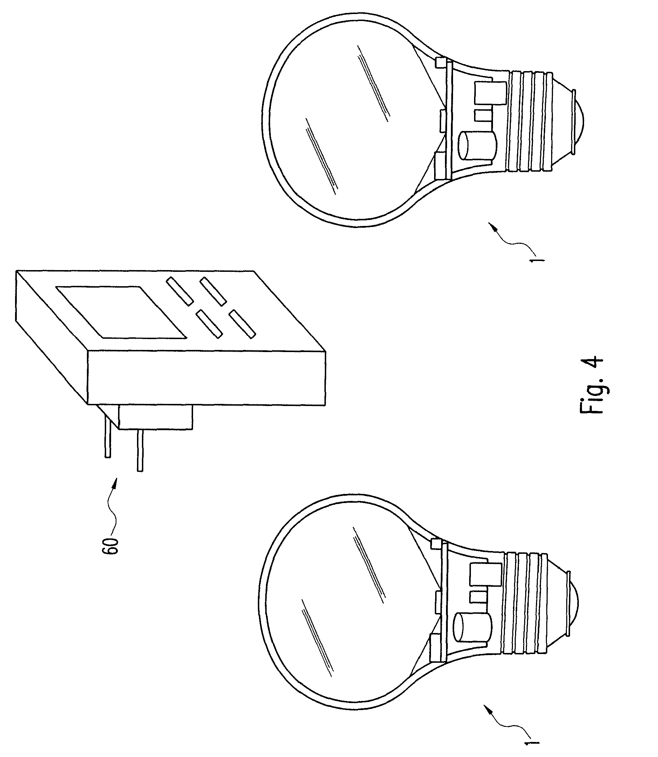

Fig.4 zeigt ein System, bestehend aus mehreren Elementen, nämlich einer zentralen Steuereinheit 60 und zwei Retrofit-LED-Modulen 1. Bei letzteren kann es sich um die Ausführung aus Fig.1 zur Verwendung mit Netzstrom oder für die Ausführung aus Fig.2 zur Verwendung mit Niedervolt oder einer Kombination daraus handeln, wobei die Zahl nicht auf zwei beschränkt ist. Im Folgenden wird von der Ausführung aus Fig.1 ausgegangen.

Bei der adaptiven, also den äußeren Bedingungen angepassten Ausleuchtung eines Raums ist es notwendig, alle Leuchtelemente auf synchronisierte, d.h. abgestimmte Weise zu betreiben. Hierfür ist es notwendig, dass eine, vorzugsweise zentrale Steuereinheit alle Leuchten regelt und dass die Lampen und die zentrale Steuereinheit kommunizieren können.

Eine solche Abstimmung ist auch dann notwendig, wenn, wie oben beschrieben, ein Sensor nur dann aktiv sein soll, wenn die LEDs ausgeschaltet sind, um von diesen nicht beeinträchtigt zu werden. Dies lässt sich in diesem Ausführungsbeispiel nur dann realisieren, wenn alle Retrofit-LED-Module gleichzeitig ausgeschaltet sind, umso beispielsweise das tatsächliche Umgebungslicht bzw. Tageslicht erfassen zu können.

Zur Synchronisation ist weiterhin ein Kommunikationsmittel zwischen den Elementen notwendig.

Die Kommunikation kann dabei über eine Funkschnittstelle, die jedes einzelne Element aufweist, realisiert werden. Sie kann auch über einen Festleiter erfolgen. Für letzteren kann ein Kabel zwischen den Elementen verlegt werden. Es kann jedoch auch ein vorhandenes Netzwerk genutzt werden oder das Stromnetz mittels Adapter hierfür nutzbar gemacht werden. Der Netzstrom wird hierbei mit hochfrequenten Signalen überlagert, welche als Kommunikation zwischen den Elementen dienen. Jedes Element benötigt hierfür einen Adapter. Auf diese Weise kann beispielsweise ein Netzwerk im Ethernet-Standard realisiert werden. Diese Art der Kommunikation hat den Vorteil, dass die Stromversorgung und die Datenkommunikation über dasselbe Kabel erfolgt.

Die Steuereinheit 60 weist eine vorzugsweise integrierte Steuerschaltung, beispielsweise einen ASIC auf. In diesem Beispiel ist die Steuereinheit als Netzstromstecker realisiert. Auf diese Weise erhält sie wie oben beschrieben gleichzeitig eine Stromversorgung und einen Kommunikationsweg zu den Retrofit-LED-Modulen.

Außerdem umfasst sie eine Benutzerschnittstelle. Diese besteht aus einer Informationsausgabe, wie einem Display und/oder einem Lautsprecher und einer Informationseingabe, wie konventioneller Tasten. Denkbar wäre hierfür jedoch auch ein Touchscreen oder eine Spracherkennung.

Des Weiteren kann die Steuereinheit einen oder mehrere Sensoren aufweisen.

Weiterhin kann das System Sensoren umfasst, die von der Steuereinheit und den Retrofit-LED-Modulen separiert sind. Dies kann dann sinnvoll sein, wenn Beispielsweise eine Raumbeleuchtung von keinem der Elemente aus unverfälscht gemessen werden kann.

Neben der Steuereinheit können nach wie vor ebenfalls die einzelnen Retrofit-LED-Module über eine Steuerschaltung verfügen, welche ein korrektes Ansteuern der einzelnen LEDs ermöglicht. Beispielsweise wäre es auch denkbar, dass die zentrale Steuereinheit mittels der Sensorsignale lediglich Richtwerte wie Helligkeit und Spektrum berechnet und diese an die einzelnen Retrofit-LED-Module aussendet. Diese ermitteln wiederum anhand der Richtwerte und mittels ihrer eigenen Steuerschaltungen die genaue Ansteuerung der einzelnen LEDs.

Das System kann auch so ausgebildet sein, dass die einzelnen Retrofit-LED-Module unabhängig voneinander mittels der zentralen Steuereinheit einstellbar sind. Hierfür ist es notwendig, dass jedes einzelne Retrofit-LED-Modul eine eindeutige Identifikation, beispielsweise eine Netzwerkadresse aufweist. Diese kann manuell über die Eingabe der Steuereinheit oder automatisch von dieser den einzelnen Retrofit-LED-Modulen zugeordnet werden.

Nun ist denkbar, dass mehrere Systeme, beispielsweise in mehreren Räumen desselben Hauses oder in mehreren Bereichen eines Raumes, genutzt werden sollen. Hierfür kann entweder eine einzige zentrale Steuereinheit eingesetzt werden, die die Beleuchtung der einzelnen Räume unabhängig voneinander steuern kann, oder es kann jedes einzelne Zimmer eine Steuereinheit aufweisen. In jedem Fall ist eine korrekte Adressierung der einzelnen Retrofit-LED-Module notwendig, um Befehlskonflikte zu vermeiden und eine individuelle Beleuchtung der Zimmer zu garantieren.

Ein Benutzerfreundliches Verfahren zur Adresszuweisung bzw. der Zuordnung der einzelnen Retrofit-LED-Module zu einer bestimmten Steuereinheit könnte folgendermaßen ablaufen: Ein erster Raum wird mit neuen Retrofit-LED-Modulen ausgestattet. Anschließend wird eine erste Steuereinheit in eine Steckdose eingesteckt und eine Initialisierung gestartet. Den neuen und somit noch keine Adresse aufweisenden Retrofit-LED-Modulen wird erstmalig eine eindeutige Adresse von der Steuereinheit zugewiesen. Alternativ könnten diese auch de Steuereinheit zugeordnet werden. Dies ließe sich beispielsweise mit Zuweisung einer Identifikation der Steuereinheit realisieren.

Anschließend wird dieselbe Prozedur in einem zweiten Zimmer durchgeführt. Da die Retrofit-LED-Module des ersten Raums bereits eine Adresse und/oder eine Identifikation der ersten Steuereinheit aufweisen, werden diese von der zweiten Steuereinheit bei der Adressierung ignoriert. Somit wird ein Konflikt zwischen den Befehlen der einzelnen Steuergeräte vermieden.

Das System verfügt ebenfalls über die Möglichkeit, die Adressen einzelner Retrofit-LED-Module zu löschen, d.h. diese und den uninitialisierten Zustand zurückzusetzen. Diese Löschung kann manuell mittels der Steuereinheit durchgeführt werden, oder automatisch, beispielsweise, wenn ein Retrofit-LED-Modul eine bestimmte Zeit von der Stromversorgung getrennt ist.

Dank der Adressierung besteht außerdem die Möglichkeit, mit einer Steuereinheit in einem erstem Raum, gezielt eine oder mehrere Retrofit-LED-Module in einem zweiten Raum, auszuwählen, um ihre Einstellungen zu verändern. Somit kann von einem ersten Raum aus mit einer ersten Steuereinheit die Beleuchtung in einem zweiten Raum mit einer zweiten Steuereinheit verändert werden. Es besteht also die Möglichkeit der Fernsteuerung.

Eine weitere vorteilhafte Eigenschaft des Systems stellt seine benutzerfreundliche Adaptierbarkeit dar. Das System kann einmalig vom Benutzer auf die gewünschte Art der Ausleuchtung eines Raums, insbesondere die Helligkeit und Spektralverteilung betreffend, eingestellt werden. Das System referenziert anschließend jedoch nicht nur die Einstellung, sondern vor allem auch die Messsignale der Sensoren. Diese Messignale dienen weiterhin als Referenzwerte. Das bedeutet, dass die Retrofit-LED-Module so betrieben werden, dass die aktuellen Messergebnisse der Sensoren den Referenzwerten entsprechen. Auf diese Weise können von außen bedingte Veränderung, wie Tageslicht, kompensiert werden. Diese konstante Beleuchtung ist beispielsweise in einem Geschäft von besonderem Vorteil.

Darüber hinaus besteht jedoch auch die Möglichkeit, das System so zu programmieren, dass eine gezielte Veränderung der Beleuchtung erreicht wird. Dank der Adaptivität des Systems können erneut äußere Einflüsse so kompensiert werden, dass die Veränderung nicht negativ von den äußeren Einflüssen beeinträchtigt wird.

Eine weitere Anwendung besteht in der Ausleuchtung eines Gewächshauses. Bekanntlich benötigen Pflanzen zur Photosynthese insbesondere blaues, d.h. kurzwelliges, und rotes, d.h. langwelliges Licht. Das System kann nun so adaptiert werden, dass die Pflanzen das für sie optimale Lichtspektrum erhalten. Auf Grund der Adaptivität des Systems können Veränderungen, wie Tageszeit oder Füllstand des Gewächshauses, automatisch vom System kompensiert werden.

Weiterhin kann das System in der Form adaptiv ausgestaltet sein, dass nur die Retrofit-LED-Module leuchten, die mittels einer Farbsensorik grünes Licht messen. Auf diese Weise wird nur der Bereich beleuchtet, in dem grüne Pflanzen stehen. Leer stehender Raum, wie ein grauer Boden oder eine braune Erde wird nicht beleuchtet.

Eine weitere, in Fig.4 nicht gezeigte Ausführungsform besteht darin, dass die einzelnen Elemente des Systems mechanisch miteinander verbunden sind und somit eine einheitliche Vorrichtung bilden. Auf diese Weise könnte beispielsweise ein mehrere Leuchten umfassender Deckenfluter realisiert werden.

### Bezugszeichenliste:

- 1: Retrofit-LED-Modul für Netzstrom
- 2: Träger
- 3: LED
- 4: Lampensockel
- 5: Ansteuerelektronik
- 6: Steuerschaltung
- 7: Sensor auf Träger und abgeschattet von LED
- 8: Kavität
- 9: LED-Kapsel
- 10: Lampenraum oberhalb des Trägers
- 21: Retrofit-LED-Modul für Niedvoltversorgung
- 22: Träger
- 23: RGB-LEDs
- 24: Kontakte des Retrofit-LED-Moduls
- 25: Ansteuerelektronik
- 26: Steuerschaltung
- 27: Sensor auf Träger und innerhalb des Ausstrahlbereichs der LED
- 28: Kavität
- 29: Streuscheibe
- 30: Sensor separat von Träger und außerhalb des Ausstrahlbereichs der LED
- 31: Linse
- 36: Chip-on-Board
- 46: Integrierter Schaltkreis auf Träger
- 56: Chip zum Aufstecken auf Träger
- 60: Steuereinheit

## Patentansprüche

1. Retrofit-LED-Modul (1, 21) aufweisend einen Träger (2, 22) mit mindestens zwei LED (3, 23), weiterhin aufweisend einen Retrofitanschluss (4, 24) zum mechanischen und elektrischen Kontaktieren an konventionellen Lampenfassungen und eine Elektronik (6, 26) zur Ansteuerung der mindestens zwei LED (3, 23), wobei
zumindest ein Teil der Elektronik (6, 26) in den Träger (2, 22) integriert ist, und die Elektronik (6, 26) einen ersten Sensor (27) bzw. die zugehörige Elektronik zur Signalverarbeitung aufweist, um die integrierte Amplitude des ausgestrahlten Lichts des Retrofit-LED-Moduls (1) zu messen, und
**dadurch gekennzeichnet, dass**
die Elektronik einen zweiten Sensor (30) bzw. die zugehörige Elektronik zur Signalverarbeitung aufweist, um die Umgebungshelligkeit zu Erfassen bzw. das Farbspektrum des Umgebungslichts zu messen, wobei jeder LED (3, 23) ein Farb- und/oder Helligkeitssensor zugeordnet ist, um direkt deren ausgestrahltes Licht zu messen.

2. Retrofit-LED-Modul gemäß Anspruch 1, wobei der erste Sensor (27) ein Lichtsensor (27) oder ein Farbsensor (27) ist.

3. Retrofit-LED-Modul gemäß Anspruch 1 oder 2, wobei der zweite Sensor (30) ein Tageslichtsensor (30) oder ein Farbsensor (30) ist.

4. Retrofit-LED-Modul gemäß einem der Ansprüche 1 bis 3, wobei der Farb- und/oder Helligkeitssensor, der jeder der LEDs zugeordnet ist, vom Licht der anderen LEDs abgeschattet ist.

5. Retrofit-LED-Modul (1, 21) gemäß Anspruch 1, **dadurch gekennzeichnet, dass** der Träger (2, 22), auf dem sich die mindestens zwei LED (3, 23) befinden, aus einem oder mehreren Substraten, vorzugsweise aus Silizium oder einer Siliziumverbindung besteht.

6. Retrofit-LED-Modul (1, 21) gemäß einem der vorherigen Ansprüche, **dadurch gekennzeichnet, dass** der in den Träger (2, 22) integrierte Teil der Elektronik (6, 26) in Chip on Board (36) Technik ausgebildet ist und auf dem Träger (2, 22) angebracht ist.

7. Retrofit-LED-Modul (1, 21) gemäß einem der vorherigen Ansprüche, **dadurch gekennzeichnet, dass** der in den Träger (2, 22) integrierte Teil der Elektronik (6, 26) als integrierter Schaltkreis (46) in dem Substrat des Trägers (2, 22) ausgebildet ist.

8. Retrofit-LED-Modul (1, 21) gemäß einem der vorherigen Ansprüche, **dadurch gekennzeichnet, dass** der in den Träger (2, 22) integrierte Teil der Elektronik (6, 26) eine intelligente Steuerschaltung, beispielsweise einen ASIC oder Mikrocontroller, zur adaptiven Steuerung des Retrofit-LED-Moduls (1) aufweist.

9. Retrofit-LED-Modul (1, 21) gemäß einem der vorherigen Ansprüche, **dadurch gekennzeichnet, dass** die Elektronik eine Temperatursensorik (7, 27, 30), eine Bewegungssensorik (7, 27, 30) und/oder eine akustische Sensorik aufweist.

10. Retrofit-LED-Modul (1, 21) gemäß einem der vorhergehenden Ansprüche,
**dadurch gekennzeichnet, dass** sich die Sensorik innerhalb des Hauptausstrahlwinkels mindestens einer LED (3, 23) befindet und/oder davon abgeschattet ist.

11. Retrofit-LED-Modul (1, 21) gemäß einem der vorherigen Ansprüche, **dadurch gekennzeichnet, dass** die Elektronik (5, 6) eine Ansteuerelektronik aufweist, die ein Dimmen mindestens einer LED (3, 23) ermöglicht.

12. Retrofit-LED-Modul (1, 21) gemäß einem der vorherigen Ansprüche, **dadurch gekennzeichnet, dass** das Retrofit-LED-Modul (1, 21) mindestens jeweils eine rote, grüne und blaue LED aufweist (23), und diese LED unabhängig voneinander mittels der Elektronik (5, 6) ansteuerbar ist.

13. Retrofit-LED-Modul (1, 21) gemäß einem der vorherigen Ansprüche, **dadurch gekennzeichnet, dass** die Sensorik (7, 27, 30), insbesondere die Lichtsensorik, nur in kurzen, von einander zeitlich getrennten Zeitintervallen aktiviert ist und in diesen Zeitintervallen die mindestens eine LED (3, 23) ausgeschaltet ist.

## Claims

1. Retrofit LED module (1, 21) having a support (2, 22) with at least two LEDs (3, 23), furthermore having a retrofit connection (4, 24) for mechanically and electrically contacting conventional lamp sockets and an electronic system (6, 26) for actuating the at least two LEDs (3, 23), wherein at least one part of the electronic system (6, 26) is integrated in the support (2, 22) and the electronic system (6, 26) having a first sensor (27) respectively the associated electronic system for signal processing in order to measure the integrated amplitude of the emitted light of the retrofit LED module (1) and **characterized in that** the electronic system has a second sensor (30) respectively the associated electronic system for signal processing in order to register the ambient brightness respectively measure the color spectrum of the ambient light, wherein a color and/or brightness sensor is assigned to each LED (3, 23) in order to directly measure their emitted light.

2. Retrofit LED module according to claim 1, wherein the first sensor (27) is a light sensor (27) or a color sensor (27).

3. Retrofit LED module according to claim 1 or 2, wherein the second sensor (30) is a daylight sensor (30) or a color sensor (30).

4. Retrofit LED module according to one of the claims 1 to 3, wherein the color and/or brightness sensor that is assigned to each of the LEDs is shadowed from the light of the other LEDs.

5. Retrofit LED module (1, 21) according to claim 1, **characterized in that** the support (2, 22), the at least two LEDs (3, 23) are located on, consists of one or several substrates, preferably of silicon or a silicon compound.

6. Retrofit LED module (1, 21) according to one of the preceding claims, **characterized in that** the part of the electronic system (6, 26) integrated in the support (2, 22) is formed in chip on board (36) technology and mounted on the support (2, 22).

7. Retrofit LED module (1, 21) according to one of the preceding claims, **characterized in that** the part of the electronic system (6, 26) integrated in the support (2, 22) is formed as integrated circuit (46) in the substrate of the support (2, 22).

8. Retrofit LED module (1, 21) according to one of the preceding claims, **characterized in that** the part of the electronic system (6, 26) integrated in the support (2, 22) has an intelligent control circuit, for example an ASIC or microcontroller for the adaptive control of the retrofit LED module (1).

9. Retrofit LED module (1, 21) according to one of the preceding claims, **characterized in that** the electronic system has a temperature sensor system (7, 27, 30), a motion sensor system (7, 27, 30) and/or an acoustic sensor system.

10. Retrofit LED module (1, 21) according to one of the preceding claims, **characterized in that** the sensor system is located within the main beam angle of at least one LED (3, 23) and/or is shadowed from it.

11. Retrofit LED module (1, 21) according to one of the preceding claims, **characterized in that** the electronic system (5, 6) has an actuating electronic system that enables dimming of at least one LED (3, 23).

12. Retrofit LED module (1, 21) according to one of the preceding claims, **characterized in that** the retrofit LED module (1, 21) has at least a red, green and blue LED (23), respectively, and this LED is actuatable via an electronic system (5, 6) the one independent from the other.

13. Retrofit LED module (1, 21) according to one of the preceding claims, **characterized in that** the sensor system (7, 27, 30), particularly the light sensor system, is activated only in short time intervals, separated in time, and the at least one LED (3, 23) is turned off in these time intervals.

## Revendications

1. Module DEL rétrofit (1, 21) comportant un support (2, 22) avec au moins deux DEL (3, 23), comportant de plus un raccordement rétrofit (4, 24) pour mettre en contact mécaniquement et électriquement des douilles de lampe conventionnelles et un système électronique (6, 26) pour actionner les au moins deux DEL (3, 23), dans lequel au moins une partie du système électronique (6, 26) est intégrée au support (2, 22) et dans lequel le système électronique (6, 26) comporte un premier détecteur (27) respectivement le système électronique associé pour traiter le signal de manière à mesurer l'amplitude intégrée de la lumière émise du module DEL rétrofit (1) et **caractérisé en ce que** le système électronique comporte un deuxième détecteur (30) respectivement le système électronique associé pour traiter le signal de manière à régler la luminosité ambiante respectivement mesurer le spectre de couleur de la lumière ambiante, dans lequel un détecteur de couleur et/ou de luminosité est attribué à chaque DEL (3, 23) de manière à mesurer directement leur lumière émise.

2. Module DEL rétrofit selon la revendication 1, dans lequel le premier détecteur (27) est un détecteur de lumière (27) ou un détecteur de couleur (27).

3. Module DEL rétrofit selon la revendication 1 ou 2, dans lequel le deuxième détecteur (30) est un détecteur de lumière du jour (30) ou un détecteur de couleur (30).

4. Module DEL rétrofit selon l'une des revendications de 1 à 3, dans lequel le détecteur de couleur et/ou de luminosité qui est attribué à chaque DEL est protégé de la lumière des autres DEL.

5. Module DEL rétrofit (1, 21) selon la revendication 1, **caractérisé en ce que** le support (2, 22), sur lequel sont situées les au moins deux DEL (3, 23), consiste en un ou plusieurs substrats, de préférence en silicium ou réalisé dans un composé de silicium.

6. Module DEL rétrofit (1, 21) selon l'une quelconque des revendications précédentes, **caractérisé en ce que** la partie du système électronique (6, 26) intégrée au support (2, 22) est formée suivant la technologie du montage direct (36) et montée sur le support (2, 22).

7. Module DEL rétrofit (1, 21) selon l'une quelconque des revendications précédentes, **caractérisé en ce que** la partie du système électronique (6, 26) intégrée au support (2, 22) est composée comme un circuit intégré (46) dans le substrat du support (2, 22).

8. Module DEL rétrofit (1, 21) selon l'une quelconque des revendications précédentes, **caractérisé en ce que** la partie du système électronique (6, 26) intégrée au support (2, 22) comporte un circuit de commande intelligent, par exemple un ASIC ou un microcontrôleur pour le contrôle adaptatif du module DEL rétrofit (1).

9. Module DEL rétrofit (1, 21) selon l'une quelconque des revendications précédentes, **caractérisé en ce que** le système électronique comprend un système de détecteur de température (7, 27, 30), un système de détecteur de mouvement (7, 27, 30) et/ou un système de détecteur acoustique.

10. Module DEL rétrofit (1, 21) selon l'une quelconque des revendications précédentes, **caractérisé en ce que** le système de détecteur est situé à l'intérieur de l'angle de rayonnement principal d'au moins une DEL (3, 23) et/ou est protégé de ce dernier.

11. Module DEL rétrofit (1, 21) selon l'une quelconque des revendications précédentes, **caractérisé en ce que** le système électronique (5, 6) comporte un système électronique d'actionnement qui permet d'atténuer au moins une DEL (3, 23).

12. Module DEL rétrofit (1, 21) selon l'une quelconque des revendications précédentes, **caractérisé en ce que** le module DEL rétrofit (1, 21) comporte au moins une DEL rouge, verte et bleue (23), respectivement, et **en ce que** cette DEL peut être actionnée par l'intermédiaire d'un système électronique (5, 6) indépendants l'un de l'autre.

13. Module DEL rétrofit (1, 21) selon l'une quelconque des revendications précédentes, **caractérisé en ce que** le système de détecteur (7, 27, 30), en particulier le système de détecteur de lumière, n'est activé qu'à des intervalles courts, à des moments différents, et **en ce que** l'au moins une DEL (3, 23) est éteinte au cours de ces intervalles de temps.
